# EUROPEAN PATENT SPECIFICATION

(11) **EP 2 681 848 B1**
(45) Date of publication and mention of the grant of the patent: **08.04.2015**
(21) Application number: 12703545.9
(22) Date of filing: 13.02.2012
(51) Int. Cl.: H04B 1/10, H04B 1/52

(54) **SIGNAL QUALITY MEASUREMENT BASED ON TRANSMITTER STATUS**
SIGNALQUALITÄTMESSUNG BASIEREND AUF SENDERSTATUS
MESURE DE LA QUALITÉ DU SIGNAL FONDÉE SUR L'ÉTAT DE L'ÉMETTEUR

(30) Priority: 03.03.2011 US 201113039353
(43) Date of publication of application: 08.01.2014
(73) Proprietor: Telefonaktiebolaget L M Ericsson (PUBL), 164 83 Stockholm (SE)
(72) Inventor: LINDOFF, Bengt, SE-237 35 Bjärred (SE); WILHELMSSON, Leif, SE-247 55 Dalby (SE)
(74) Representative: Åkerman, Mårten Lennart
(86) International application number: PCT/EP2012/052417
(87) International publication number: WO 2012/116888

(56) References cited:
- EP-A2- 0 848 502
- WO-A1-00/18023
- WO-A1-2005/099109
- WO-A2-02/13402
- US-A1- 2001 006 900
- US-A1- 2003 086 383

## Description

### TECHNICAL FIELD

The invention relates generally to a mobile terminal, and more particularly, to methods and apparatus for improving the terminal performance.

### BACKGROUND

Power is a limited resource in a mobile terminal. As a result, methods for reducing the power consumption of the mobile terminal are highly desirable. One such approach is to adapt the radio receiver in situations with good signal conditions. A reduction in the low noise amplifier/mixer (LNA) linearity requirements by changing the bias current could significantly reduce the power consumption in the radio receiver. However, reduced linearity increases the risk of inter-modulation (IM) products (such as interference) leaking into the receive band. Of particular importance in this respect is the nonlinear mixing of the strong transmitted signal from the device's own transmitter and a strong interferer located at the half the duplex distance or twice the duplex distance.

In some bands, the problem with IM products is larger than in other bands. Full Duplex (FD) operation (i.e. simultaneous transmission and reception) provides large throughput. However, due to TX/RX duplex separation and the presence of an interferer at twice the duplex distance (or half the duplex distance), half duplex (HD) (i.e. non-simultaneous transmission and reception) in some instances provides a larger practical throughput. Using HD at all times (i.e. reducing the max UL and DL rate by half in theory) can be too conservative since the interfering scenarios are typically not static.

An example of a potential strong interferer occurring at twice the duplex distance from the receive channel is when Band 7 (2500-2570 MHz for UL and 2620-2690 MHz for DL) is used for FD. The potential strong interferer can, in this case, be a Bluetooth or a WLAN transmitter using the ISM band (2400-2483.5 MHz). For Band 7, the duplex distance is 120 MHz. If, for instance, the UL is centered at 2540 MHz, the DL will be centered at 2660 MHz. If, at the same time, a WLAN transmitter is using a channel around 2420 MHz, this could result in IM products at 2660 MHz (i.e., in the receive band).

Methods exist for adaptation of LNA/Mixer linearity based on only received in-band signal-interference-ratio (SIR) or received in-band signal level. However, these methods do not take into account the state of terminal transmission. For instance, in LTE, the reception and transmission at a certain time instant are independent of each other (a correlation does, however, exist between RX @ t and TX @ t+4 ms and vice versa). Scenarios exist where either TX or RX or both TX and RX are on at the same time. Therefore, only looking into the average in-band SIR or signal level, without considering whether the device itself is transmitting will not accurately capture the problem with IM.

A need exists, therefore, for methods and apparatus that take into account the operational state of the terminal in adapting transceiver performance.

WO 0 018 023 discloses a method for controlling the linearity of a receiver in a transceiver based on if transmit power is high by controlling the third order intercept point.

### SUMMARY

It should be emphasized that the terms "comprises" and "comprising", when used in this specification, are taken to specify the presence of stated features, integers, steps or components; but the use of these terms does not preclude the presence or addition of one or more other features, integers, steps, components or groups thereof.

In exemplary embodiments, the foregoing and other objects are achieved in methods, systems, and apparatuses for adapting a transceiver in a mobile communication terminal.

According to one exemplary embodiment, a method of adapting a transceiver includes receiving a signal at a time instant by the transceiver, determining if the transceiver is transmitting at the time instant, selectively updating one of two signal quality measurements based on the transmission determination, evaluating a difference between the two signal quality measurements and adapting an operating mode of the transceiver based on the evaluation.

According to another exemplary embodiment, a transceiver in a mobile communications terminal includes a low noise amplifier for amplifying weak received signals, a detector for detecting received signals, a signal quality estimating module for estimating a received signal quality and a control unit. The control unit determines if the transceiver is transmitting at a time instant during which the signal is received, selectively updates one of least two signal quality measurements based on the transmission determination, evaluates a difference between the two signal quality measurements and adapts an operating mode of the transceiver based on the evaluation.

### BRIEF DESCRIPTION OF THE DRAWINGS

The objects and advantages of the invention will be understood by reading the following detailed description in conjunction with the drawings in which:
FIGs. 1 to 3 illustrate methods in accordance with exemplary embodiments; and
FIG. 4 illustrates an exemplary transceiver in a mobile communication device.

### DETAILED DESCRIPTION

The various features of the invention will now be described with reference to the figures, in which like parts are identified with the same reference characters.

The various aspects of the invention will now be described in greater detail in connection with a number of exemplary embodiments. To facilitate an understanding of the invention, many aspects of the invention are described in terms of sequences of actions to be performed by elements of a computer system or other hardware capable of executing programmed instructions. It will be recognized that in each of the embodiments, the various actions could be performed by specialized circuits (e.g., analog and/or discrete logic gates interconnected to perform a specialized function), by one or more processors programmed with a suitable set of instructions, or by a combination of both. The term "circuitry configured to" perform one or more described actions is used herein to refer to any such embodiment (i.e., one or more specialized circuits and/or one or more programmed processors).

Moreover, the invention can additionally be considered to be embodied entirely within any form of computer readable carrier, such as solid-state memory, magnetic disk, or optical disk containing an appropriate set of computer instructions that would cause a processor to carry out the techniques described herein. Thus, the various aspects of the invention may be embodied in many different forms, and all such forms are contemplated to be within the scope of the invention. For each of the various aspects of the invention, any such form of embodiments as described above may be referred to herein as "logic configured to" perform a described action, or alternatively as "logic that" performs a described action.

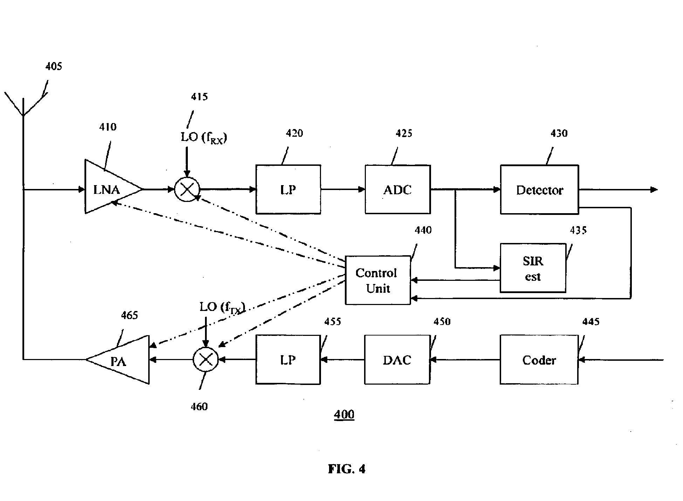

A typical transceiver within a mobile terminal or mobile device is illustrated in FIG. 4. Transceiver 400 includes an antenna 405. In the receive path, transceiver 400 may include low noise amplifier 410 for amplifying weak received signals, local oscillator 415 for mixing down received radio frequency signals to baseband signals, low pass filter 420, analog to digital converter 425 and detector 430 for detecting the received signal (i.e. demodulation and decoding). In the transmit path, transceiver 400 may include coder 445, digital to analog converter 450, low pass filter 455, local oscillator 460 and amplifier 465. Transceiver may also include signal quality module 435 and control unit 440. Signal quality module 435 can estimate or measure the received signal quality. Control unit 440 may have knowledge of transmission (i.e. when transmission takes place for example) and can receive the signal quality information from module 435. Control unit 440 can control the local oscillators 415 and 460, low noise amplifier 410 and amplifier 465. Control unit 440 can adapt or switch an operating mode of the transceiver by, for example, controlling the bias of the amplifier 465 to reduce power consumption.

According to exemplary embodiments, a transceiver may estimate the received signal quality. The signal quality may be a signal-to-noise-ratio (SNR) or a signal-to-interference-ratio (SIR) on a pilot signal. The signal quality may also be a block error rate (BLER) on a data or control channel.

The signal quality estimates may be grouped based on whether the transmitter was enabled or disabled at the time instant when the signal was received. Therefore, a first received signal quality may be estimated in sub frames (slots) when the transmitter is enabled and a second received signal quality may be estimated in sub frames (slots) when the transmitter is disabled.

A transmitter (within the mobile terminal) may be considered to be enabled when the transmitted power (i.e. the power level at which transmission takes place) is above a (predetermined) power threshold and the transmitter may be considered to be disabled when the transmitted power is below the power threshold.

The differences between the grouped signal quality estimates (i.e. between those corresponding to when the transmitter is enabled and to when the transmitter is disabled) may be utilized to adapt the transceiver unit. In a first embodiment, the adaptation may be made between different power consuming modes of the transceiver such as, for example, different bias current in the LNA/Mixer stage. In another embodiment, the adaptation may be made between operating the transceiver in a half duplex (operating) mode or in a full duplex (operating) mode in which a signalling procedure between the transceiver unit and a remote node is included.

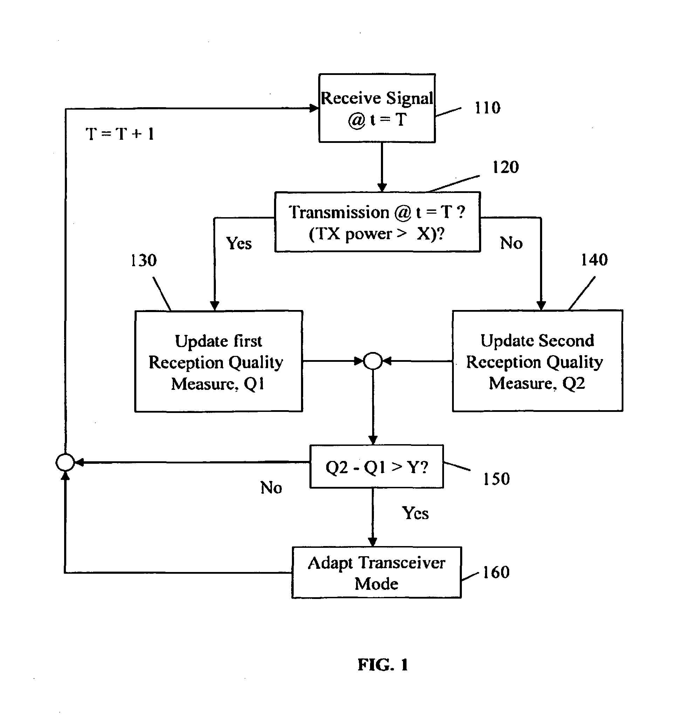

A method in accordance with exemplary embodiments in the form of a flow chart is illustrated in FIG. 1. The transceiver is in connected mode and connected to a remote node such as to a base station operating in a mobile communication system. In this exemplary embodiment, the transceiver may be operating in a low power transceiver mode. In this mode, the front end components such as the LNA and/or the mixer are in a low power mode with a lower linearity than in the high power mode (with a higher linearity).

The transceiver may receive a signal at time t = T (at step 110). The transceiver may determine whether a transmission (from the mobile terminal) occurred at time T (120). If there was a transmission at T ("yes"), a first (received) signal quality measurement Q1 may be updated based on the last received sample (i.e. received at t = T) (130). If there was no transmission at T ("no"), a second (received) signal quality measurement Q2 may be updated based on the last received sample (140). The first signal quality measurement or estimate may correspond to when transmission takes place and the second signal quality measurement or estimate may correspond to when transmission does not take place.

As described above, the transmitter may be considered to be enabled if the transmitted power is above a power threshold and the transmitter may be considered to be disabled when the transmitted power is below the power threshold. The threshold may be designated as "X" as illustrated in FIG. 1. The threshold can, for example, be -20 dBm. The first and second received signal quality estimates Q1 and Q2 could be, for example: a Block Error rate/estimate of a data channel or a control channel such as the PDCCH in LTE, or a SNR/SIR on a pilot signal such as the CPICH in WCDMA or Reference Signals in LTE for example. The reception quality measurements can be filtered in time over a number of received pilot symbols, data channel or control channel samples in order to improve the estimates.

A control unit determines whether the reception quality difference between Q2 and Q1 is larger than a threshold designated by "Y" (150). If the difference is larger than the threshold, this indicates that the transmitter, due to inter-modulation products with another signal, is causing interference to the received signal. A control unit then adapts the transceiver mode to a high power operating mode with larger linearity requirement on the LNA/Mixer (160). If the difference is equal to or below the threshold, this may indicate that the interference is not an issue and the transceiver mode may be maintained at the low power operating mode (i.e. without switching to a high power operating mode). In comparing the quality estimates, the Q1 that is being compared to Q2 is the same measure; that is, both Q1 and Q2 may be one of BLER, SNR and SIR. What is being compared is the same quality measure accumulated over a period between when the transceiver is being transmitted and when the transceiver is not transmitting.

In the embodiment described above, the two metrics (i.e. transmission enablement and difference between reception quality estimates) were used to determine that IM was a problem. This could not have been determined if only the average (averaged over both when transmitting and not transmitting) quality measure had been used.

In other embodiments, the control unit does not automatically change to high power operating modes (unconditionally). The control unit decides on low power operating mode or high power operating mode based on having prior knowledge of a transmission that may take place. In LTE for example, the terminal knows 4 ms or 4 subframes in advance whether (or not) transmission will take place. In this manner, the high power operating mode will not be unnecessarily used which results in saving power. The transmission information need to be made (available to the transceiver) sufficiently in advance to allow the receiver to adapt he operating modes.

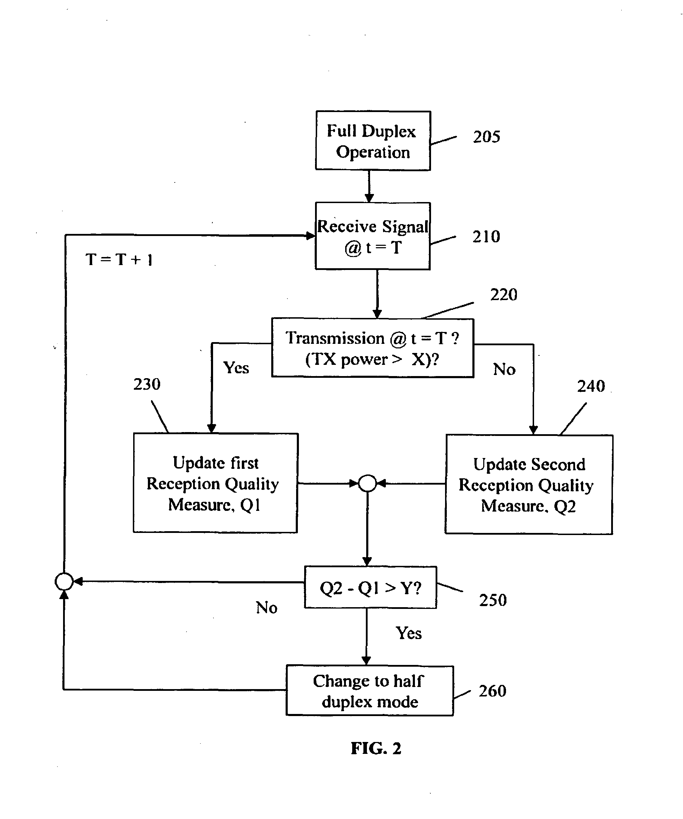

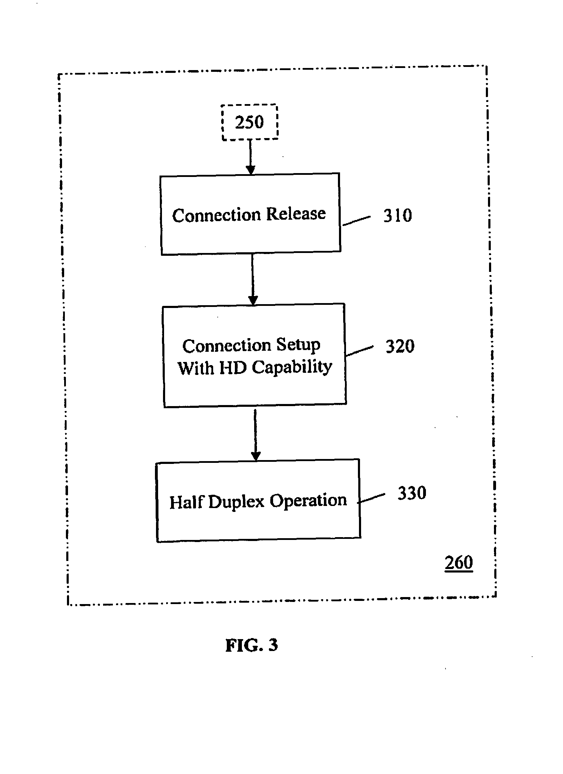

Additional embodiments may include switching between duplex modes as illustrated in FIGs. 2 and 3. The transceiver may be operating in a full duplex mode (200). That is, the transceiver may be simultaneously transmitting and receiving data (200). The process steps 210-250 correspond to process steps 110-150 described above with respect to FIG. 1.

A control unit determines whether the reception quality difference between Q2 and Q1 is larger than a threshold designated by "Y" (250). If the difference is larger than the threshold, this indicates that the transmitter, due to inter-modulation products with another signal, is causing interference to the received signal. A control unit then adapts the connection (from a full duplex connection) to a half duplex connection (260). That is, a connection where the transceiver does not transmit and receive at the same time.

Typically, the change of operation mode to half duplex mode needs interaction with the remote node. An exemplary method of switching from full duplex operating mode to half duplex operating mode (corresponding to step 260 of FIG. 2) in cellular systems such as LTE is illustrated in FIG. 3. The transceiver is in connection with the remote node in full duplex operation (corresponding to step 205 of FIG. 2). Based on the comparison at step 250, if the difference between Q2 and Q1 is greater than threshold "Y", the transceiver unit transmits a connection release message to remote unit such as a base station according to protocols used by the system (310).

Once the connection is terminated, the transceiver initiates a connection setup (according to protocols for the current system) during which the remote node is informed that the transceiver is functioning in a half duple operating mode (320). Upon establishing the connection, further communication between the transceiver and the remote node takes place in half duplex operation (330).

In another embodiment (not illustrated), the change from a full duplex operating mode to a half duplex operating mode may also be made by explicit signalling during the ongoing connection without the connection release and connection setup steps.

In newer 3GPP releases of LTE and HSPA, multiple component carrier transmission and reception is allowed. In Release 11 and onwards, non-contiguous reception and transmission may be realized. Exemplary embodiments may also be extended to these cases.

The various process steps illustrated according to exemplary embodiments in FIGs. 1-3 may be performed by at least some of the components illustrated in transceiver 400 of FIG. 4. For example, signal quality module 435 can estimate the signal quality. Control unit can have knowledge of when transmission takes place. Control unit 460 can update the reception quality measures, Q1 and Q2 and compare the difference in signal quality with the threshold. Control unit 460 can adapt the operating mode by, for example, adjusting the low noise amplifier 410 and/or power amplifier 465. The control unit can be a general purpose processor that may be adapted to at least perform the particular functions highlighted above.

A number of advantages may be realized by exemplary embodiments. By monitoring the received signal quality dependent on whether the transmitter is enabled or disabled, indication of possible transmitter impact, for instance IM products, on the received signal can be determined. Then, an appropriate transceiver action can be taken to prevent or reduce the transmitter impact on the received signal. A more robust and an improved communication may be achieved as a result.

The invention has been described with reference to particular embodiments. However, it will be readily apparent to those skilled in the art that it is possible to embody the invention in specific forms other than those of the embodiment described above. The described embodiments are merely illustrative and should not be considered restrictive in any way. The scope of the invention is given by the appended claims, rather than the preceding description, and all variations and equivalents which fall within the range of the claims are intended to be embraced therein.

## Claims

1. A method of adapting a transceiver, comprising the steps of:
receiving (110) a signal at a time instant by the transceiver;
determining (120) if the transceiver is transmitting at the time instant;
selectively updating one of two signal quality measurements (130,140), the two quality measurements representing the same measure of quality, based on the transmission determination;
evaluating a difference (150) between the two signal quality measurements; and
adapting an operating mode (160) of the transceiver based on the evaluation.

2. The method of claim 1, wherein a first of the two signal quality measurements is updated if the transceiver is transmitting at the time instant.

3. The method of claim 1, wherein a second of the two signal quality measurements is updated if the transceiver is not transmitting at the time instant.

4. The method of claim 1, wherein determining the transmission at the time instant comprises determining if a transmission power of the transceiver exceeds a predetermined threshold.

5. The method of claim 4, wherein a first of the two signal quality measurements is updated if the transmission power of the transceiver is greater than the threshold.

6. The method of claim 4, wherein a second of the two signal quality measurements is updated if the transmission power of the transceiver not greater than the threshold.

7. The method of claim 1, wherein the signal quality measurements include at least one of signal to noise ratio, signal to interference ratio or a block error rate.

8. The method of claim 1, wherein the evaluation of the difference between the two signal quality measurements comprises comparing the difference with a predetermined signal quality difference threshold, wherein adapting an operating mode of the transceiver comprises adapting the transceiver to a high power operating mode or a low power operating mode, wherein the transceiver is adapted to a high power operating mode if the difference between the signal quality measurements is greater than the predetermined signal quality difference threshold.

9. The method of claim 1, wherein adapting an operating mode of the transceiver comprises switching the transceiver to a half duplex operating mode, wherein the switching to the half duplex operating mode comprises:
releasing connection to a remote node in a full duplex operating mode; and
initiating a setup with the remote node in a half duplex operating mode.

10. A transceiver in a mobile communications terminal comprising:
a low noise amplifier (410) for amplifying weak received signals;
a detector (430) for detecting received signals;
a signal quality estimating module (435) for estimating a received signal quality; and
a control unit (440) for
determining if the transceiver is transmitting at a time instant during which the signal is received;
selectively updating one of two signal quality measurements, the two quality measurements representing the same measure of quality, based on the transmission determination;
evaluating a difference between the two signal quality measurements; and
adapting an operating mode of the transceiver based on the evaluation.

11. The transceiver of claim 10, wherein the control unit updates a first of the two signal quality measurement if the transceiver is transmitting at the time instant and updates a second of the two signal quality measure if the transceiver is not transmitting at the time instant.

12. The transceiver of claim 10, wherein the control unit determines the transceiver is transmitting if a transmission power of the transceiver exceeds a predetermined threshold, wherein the control unit updates a first of the two signal quality measurements if the transmission power of the transceiver is greater than the threshold and updates a second of the two signal quality measurements if the transmission power of the transceiver is not greater than the threshold.

13. The transceiver of claim 10, wherein the control unit evaluates the difference between the two signal quality measurements by comparing the difference with a predetermined signal quality difference threshold, wherein the control unit adapts the transceiver to a high power operating mode or a low power operating mode, wherein the control unit adapts the transceiver to a high power operating mode if the difference between the two signal quality measurements is greater than the predetermined signal quality difference threshold.

14. The transceiver of claim 10, wherein the control unit adapts an operating mode of the transceiver by switching the transceiver to a half duplex operating mode, wherein the control unit:
releases connection to a remote node in a full duplex operating mode; and
initiates a setup with the remote node in a half duplex operating mode.

15. The transceiver of claim 10, wherein the control unit adjusts a power level of a power amplifier for a transmitted signal.

## Patentansprüche

1. Verfahren zum Anpassen eines Sendeempfängers, umfassend die folgenden Schritte:
Empfangen (110) eines Signals zu einem Zeitpunkt durch den Sendeempfänger;
Bestimmen (120), ob der Sendeempfänger zu diesem Zeitpunkt sendet;
selektives Aktualisieren einer von zwei Signalgütemessungen (130, 140), wobei die zwei Gütemessungen das gleiche Gütemaß darstellen, basierend auf der Sendebestimmung;
Beurteilen (150) einer Differenz zwischen den zwei Signalgütemessungen; und
Anpassen (160) eines Betriebsmodus des Sendeempfängers basierend auf der Beurteilung.

2. Verfahren nach Anspruch 1, wobei eine erste der zwei Signalgütemessungen aktualisiert wird, wenn der Sendeempfänger zu dem Zeitpunkt sendet.

3. Verfahren nach Anspruch 1, wobei eine zweite der zwei Signalgütemessungen aktualisiert wird, wenn der Sendeempfänger zu dem Zeitpunkt nicht sendet.

4. Verfahren nach Anspruch 1, wobei das Bestimmen des Sendens zu dem Zeitpunkt ein Bestimmen umfasst, ob eine Sendeleistung des Sendeempfängers eine vorbestimmte Schwelle überschreitet.

5. Verfahren nach Anspruch 4, wobei eine erste der zwei Signalgütemessungen aktualisiert wird, wenn die Sendeleistung des Sendeempfängers größer als die Schwelle ist.

6. Verfahren nach Anspruch 4, wobei eine zweite der zwei Signalgütemessungen aktualisiert wird, wenn die Sendeleistung des Sendeempfängers nicht größer als die Schwelle ist.

7. Verfahren nach Anspruch 1, wobei die Signalgütemessungen mindestens eines von einem Signal-Rausch-Verhältnis, einem Signal-Störungs-Verhältnis oder einer Blockfehlerrate umfassen.

8. Verfahren nach Anspruch 1, wobei die Beurteilung der Differenz zwischen den zwei Signalgütemessungen ein Vergleichen der Differenz mit einer vorbestimmten Signalgüte-Differenzschwelle umfasst, wobei das Anpassen eines Betriebsmodus des Sendeempfängers ein Anpassen des Sendeempfängers an einen Hochleistungs-Betriebsmodus oder einen Niederleistungs-Betriebsmodus umfasst, wobei der Sendeempfänger an einen Hochleistungs-Betriebsmodus angepasst wird, wenn die Differenz zwischen den Signalgütemessungen größer als die vorbestimmte Signalgüte-Differenzschwelle ist.

9. Verfahren nach Anspruch 1, wobei das Anpassen eines Betriebsmodus des Sendeempfängers ein Umschalten des Sendeempfängers in einen Halbduplex-Betriebsmodus umfasst, wobei das Umschalten in den Halbduplex-Betriebsmodus umfasst:
Abbauen einer Verbindung zu einem abgesetzten Knoten in einem Vollduplex-Betriebsmodus; und
Einleiten eines Aufbaus mit dem abgesetzten Knoten in einem Halbduplex-Betriebsmodus.

10. Sendeempfänger in einem mobilen Kommunikationsendgerät, umfassend:
einen rauscharmen Verstärker (410) zum Verstärken von schwachen Empfangssignalen;
einen Detektor (430) zum Detektieren von Empfangssignalen;
ein Signalgüteschätzungsmodul (435) zum Schätzen einer Empfangssignalgüte; und
eine Steuereinheit (440) zum
Bestimmen, ob der Sendeempfänger zu einem Zeitpunkt sendet, während dessen das Signal empfangen wird;
selektiven Aktualisieren einer von zwei Signalgütemessungen, wobei die zwei Gütemessungen das gleiche Gütemaß darstellen, basierend auf der Sendebestimmung;
Beurteilen einer Differenz zwischen den zwei Signalgütemessungen; und
Anpassen eines Betriebsmodus des Sendeempfängers basierend auf der Beurteilung.

11. Sendeempfänger nach Anspruch 10, wobei die Steuereinheit eine erste der zwei Signalgütemessungen aktualisiert, wenn der Sendeempfänger zu dem Zeitpunkt sendet, und eine zweite der zwei Signalgütemessungen aktualisiert, wenn der Sendeempfänger zu dem Zeitpunkt nicht sendet.

12. Sendeempfänger nach Anspruch 10, wobei die Steuereinheit bestimmt, dass der Sendeempfänger sendet, wenn eine Sendeleistung des Sendeempfängers eine vorbestimmte Schwelle überschreitet, wobei die Steuereinheit eine erste der zwei Signalgütemessungen aktualisiert, wenn die Sendeleistung des Sendeempfängers größer als die Schwelle ist, und eine zweite der zwei Signalgütemessungen aktualisiert, wenn die Sendeleistung des Sendeempfängers nicht größer als die Schwelle ist.

13. Sendeempfänger nach Anspruch 10, wobei die Steuereinheit die Differenz zwischen den zwei Signalgütemessungen durch Vergleichen der Differenz mit einer vorbestimmten Signalgüte-Differenzschwelle beurteilt, wobei die Steuereinheit den Sendeempfänger an einen Hochleistungs-Betriebsmodus oder einen Niederleistungs-Betriebsmodus anpasst, wobei die Steuereinheit den Sendeempfänger an einen Hochleistungs-Betriebsmodus anpasst, wenn die Differenz zwischen den zwei Signalgütemessungen größer als die vorbestimmte Signalgüte-Differenzschwelle ist.

14. Sendeempfänger nach Anspruch 10, wobei die Steuereinheit einen Betriebsmodus des Sendeempfängers durch Umschalten des Sendeempfängers in einen Halbduplex-Betriebsmodus anpasst, wobei die Steuereinheit
eine Verbindung zu einem abgesetzten Knoten in einem Vollduplex-Betriebsmodus abbaut; und
einen Aufbau mit dem abgesetzten Knoten in einem Halbduplex-Betriebsmodus einleitet.

15. Sendeempfänger nach Anspruch 10, wobei die Steuereinheit einen Leistungspegel eines Leistungsverstärkers für ein Sendesignal einstellt.

## Revendications

1. Procédé d'adaptation d'un émetteur-récepteur, comprenant les étapes consistant à :
recevoir (110) un signal à un instant temporel par l'émetteur-récepteur ;
déterminer (120) si l'émetteur-récepteur est en train d'émettre à l'instant temporel ;
mettre à jour sélectivement une de deux mesures de qualité de signal (130,140), les deux mesures de qualité représentant la même mesure de qualité sur la base de la détermination de transmission ;
évaluer une différence (150) entre les deux mesures de qualité de signal ; et
adapter un mode de fonctionnement (160) de l'émetteur-récepteur sur la base de l'évaluation.

2. Procédé selon la revendication 1, dans lequel une première des deux mesures de qualité de signal est mise à jour si l'émetteur-récepteur est en train d'émettre à l'instant temporel.

3. Procédé selon la revendication 1, dans lequel une seconde des deux mesures de qualité de signal est mise à jour si l'émetteur-récepteur n'est pas en train d'émettre à l'instant temporel.

4. Procédé selon la revendication 1, dans lequel déterminer la transmission à l'instant temporel comprend de déterminer si une puissance d'émission de l'émetteur-récepteur excède un seuil prédéterminé.

5. Procédé selon la revendication 4, dans lequel une première des deux mesures de qualité de signal est mise à jour si la puissance d'émission de l'émetteur-récepteur est supérieure à un seuil.

6. Procédé selon la revendication 4, dans lequel une seconde des deux mesures de qualité de signal est mise à jour si la puissance d'émission de l'émetteur-récepteur n'est pas supérieure au seuil.

7. Procédé selon la revendication 1, dans lequel les mesures de qualité de signal incluent au moins un d'un rapport signal sur bruit, rapport signal sur interférence ou un taux d'erreur de bloc.

8. Procédé selon la revendication 1, dans lequel l'évaluation de la différence entre les deux mesures de qualité de signal comprend de comparer la différence avec un seuil de différence de qualité de signal prédéterminé, dans lequel adapter un mode de fonctionnement de l'émetteur-récepteur comprend d'adapter l'émetteur-récepteur à un mode de fonctionnement à haute puissance ou un mode de fonctionnement à basse puissance, dans lequel l'émetteur-récepteur est adapté à un mode de fonctionnement à haute puissance si la différence entre les mesures de qualité de signal est supérieure au seuil de différence de qualité de signal prédéterminé.

9. Procédé selon la revendication 1, dans lequel l'adaptation d'un mode de fonctionnement de l'émetteur-récepteur comprend de commuter l'émetteur-récepteur à un mode de fonctionnement semi-duplex, dans lequel la commutation au mode de fonctionnement semi-duplex comprend de :
libérer une connexion à un noeud distant dans un mode fonctionnement duplex total ; et
amorcer un établissement avec le noeud distant dans un mode de fonctionnement semi-duplex.

10. Emetteur-récepteur dans un terminal de communications mobile comprenant :
un amplificateur de faible bruit (410) pour amplifier des signaux faible reçus ;
un détecteur (430) pour détecter des signaux reçus ;
un module d'estimation de qualité de signal (435) pour estimer une qualité de signal reçue ; et
une unité de commande (440) pour
déterminer si l'émetteur-récepteur est en train d'émettre à un instant temporel pendant lequel le signal est reçu ;
mettre à jour sélectivement une de deux mesures de qualité de signal, les deux mesures de qualité représentant la même mesure de qualité sur la base de la détermination de transmission ;
évaluer une différence entre les deux mesures de qualité de signal ; et
adapter un mode de fonctionnement de l'émetteur-récepteur sur la base de l'évaluation.

11. Emetteur-récepteur selon la revendication 10, dans lequel l'unité de commande met à jour une première de deux mesures de qualité de signal si l'émetteur-récepteur est en train d'émettre à l'instant temporel et met à jour une seconde des deux mesures de qualité de signal si l'émetteur-récepteur n'est pas en train d'émettre à l'instant temporel.

12. Emetteur-récepteur selon la revendication 10, dans lequel l'unité de commande détermine que l'émetteur-récepteur est en train d'émettre si une puissance d'émission de l'émetteur-récepteur excède un seuil prédéterminé, dans lequel l'unité de commande met à jour une première des deux mesures de qualité de signal si la puissance d'émission de l'émetteur-récepteur est supérieure au seuil et met à jour une seconde des deux mesures de qualité de signal si a puissance d'émission de l'émetteur-récepteur n'est pas supérieure au seuil.

13. Emetteur-récepteur selon la revendication 10, dans lequel l'unité de commande évalue la différence entre les deux mesures de qualité de signal en comparant la différence avec un seuil de différence de qualité de signal prédéterminé, dans lequel l'unité de commande adapte l'émetteur-récepteur à un mode de fonctionnement à haute puissance ou un mode de fonctionnement à basse puissance, dans lequel l'unité de commande adapte l'émetteur-récepteur à un mode de fonctionnement à haute puissance su la différence entre les deux mesures de qualité de signal est supérieure au seuil de différence de qualité de signal prédéterminé.

14. Emetteur-récepteur selon la revendication 10, dans lequel l'unité de commande adapte un mode de fonctionnement de l'émetteur-récepteur en commutant l'émetteur-récepteur à un mode de fonctionnement semi-duplex, dans lequel l'unité de commande :
libère une connexion à un noeud distant dans un mode fonctionnement duplex total ; et
amorce un établissement avec le noeud distant dans un mode de fonctionnement semi-duplex.

15. Emetteur-récepteur selon la revendication 10, dans lequel l'unité de commande ajuste un niveau de puissance d'un amplificateur de puissance pour un signal transmis.
